# EUROPÄISCHE PATENTANMELDUNG

(11) **EP 3 130 714 A1**
(43) Veröffentlichungstag der Anmeldung: **15.02.2017**
(21) Anmeldenummer: 15002425.5
(22) Anmeldetag: 14.08.2015
(51) Int. Cl.: E04B 1/76, E04B 1/80, E04B 1/74

(54) **DÄMMPLATTE**

(71) Anmelder: Strohplus G.m.b.H., 2440 Moosbrunn (AT)
(72) Erfinder: Vay, Oliver, 1210 Wien (AT); Möseler, Boris, 3474 Kirchberg am Wagram (AT); Hansmann, Christian, 3465 Königsbrunn am Wagram (AT)
(74) Vertreter: Patentanwälte Barger, Piso & Partner

(57) **Zusammenfassung**

Die Erfindung betrifft eine Dämmplatte, aufweisend einen mindestens dreilagigen Aufbau, mit einer Mittellage (2) aus Stroh oder ähnlichen langfaserigen nachwachsenden Rohstoffen und jeweils einer oberen und einer unteren Decklage (3) aus einem flexiblen Faser-Gewebe.

Zur weitestgehenden Reduktion von Klebestoffen ist vorgesehen, dass die Lagen (2,3) miteinander vernäht sind. Die Umschlingungen der Nähte können zum Vermeiden des Aufgehens mit geringen Klebstoffmengen fixiert sein.

Ausgestaltungen betreffen die Anordnung und Ausbildung der Nähte und der Mittelschicht und ein Herstellungsverfahren.

## Beschreibung

Die Erfindung bezieht sich auf ein Dämmelement aus Stroh und ein Verfahren zu dessen Herstellung gemäß dem Oberbegriff des Patentanspruchs 1 bzw. des Patentanspruches 9.

Energieeffizientes Bauen und qualitativ hochwertige Sanierungen sind ein Schlüssel für langfristig wirksamen Klimaschutz. Um Klimaschutzmaßnahmen umzusetzen, werden Baustandards etabliert und es sind entsprechende Energiekennzahlen zu erreichen. Eine zunehmende Bedeutung kommt hier auch der Verwendung ökologischer Bau- und Dämmstoffe zu. Ein hervorragend geeigneter ökologischer Bau- bzw. Dämmstoff für die Umsetzung der energiesparenden und ökologischen Bauweise ist Stroh! Stroh fällt als Nebenprodukt in der Landwirtschaft an und ist in ausreichenden Mengen kostengünstig und in im Wesentlichen gleichbleibender Qualität verfügbar. Stroh hat eine sehr gute wärmedämmende Materialeigenschaft und wird bereits in unterschiedlichen Varianten für die Errichtung energieeffizienter Gebäude verwendet. Eine mögliche, bereits bekannte Variante ist die Verwendung von Strohballen in lasttragender Bauweise. Eine lasttragende Strohballenwand, insbesondere deren Anschlussaufbau, ist in der Druckschrift AT 13 558 U1 beschrieben.

Eine weitere Variante für den Einsatz von Stroh zur Wärmedämmung von Gebäuden ist die Verwendung von Stroh in Form von Wärmedämm-Platten. Eine Herstellung von Wärmedämmplatten aus Stroh in Analogie zu in der Holzwerkstoff-Industrie üblichen Verfahren, das heißt unter Zugabe von Klebstoffen in sehr geringen Mengen ist schwierig bzw. nicht möglich. Beispielsweise werden aus Holzfasern unter Zugabe von 4 bis 5 % eines Klebstoffsystems Dämmstoffplatten hergestellt, was aufgrund der wachsartigen Cuticula der Strohhalme mit Stroh nicht möglich ist. Bei Zugabe einer ausreichend hohen Menge eines entsprechenden Klebstoffsystems wie beispielsweise Isocyanat-Klebstoffen können auch die Halme des Strohs miteinander verklebt und zu einer Platte geformt werden. In der DE 44 36 981 A1 ist die Herstellung einer Dämmstoffplatte aus Stroh oder ähnlichen cellulosehaltigen Rohstoffen beschrieben. Das zerkleinerte Stroh wird dabei mit Diphenylmethan-4,4-diisocyanat bei einem Klebstoffanteil zwischen 12 und 17 Gew.-% zu einer Dämmstoff-Platte gepresst. Aufgrund des hohen Klebstoffanteils wird das Produkt teuer und unökologisch.

Aus DE19810862A1 ist ein Verfahren bekannt geworden, um Dämmplatten aus Strohfasern und synthetischem oder natürlichem Latex herzustellen. Für die Herstellung der Platten wird dabei das Stroh mechanisch aufgeschlossen (Spleißung), mit latexgetränkten Jutegewebe abgedeckt und so lange thermisch behandelt, bis eine Vulkanisation des Latex eintritt. Die Menge an Bindemittel beträgt dabei zwischen 10 und 30 Gew.-% bezogen auf die Strohmenge.

Ferner ist es möglich, Strohplatten mit Hilfe von schäumenden Kunststoffen, die in eine Strohschicht injiziert werden, herzustellen, wie aus der WO 92/05021 A1 bekannt ist.

Des Weiteren besteht allgemein die Möglichkeit, Fasermaterial und somit auch Stroh, mit einer entsprechend hohen Menge mineralischer Bindemittel zu einem Plattenwerkstoff zu verbinden. Aus der Druckschrift DE 10 2007 026 638 B4 ist ein Verfahren zu Herstellung feuerbeständiger Platten aus nachwachsenden Rohstoffen und einem Bindemittel bekannt. Diese Platten bestehen im Wesentlichen aus dem mineralischen Bindemittel und einem geringen Anteil an Stroh. Das zur Herstellung der Platte verwendete Stroh hat dementsprechend einen Füllstoffcharakter.

Allen den bekannten und beschriebenen Wärmedämm-Elementen, zu deren Herstellung Stroh verwendet wird, ist gemeinsam, das die Herstellung der Dämmstoff-Platten unter Zugabe eines hohen und somit wesentlichen Anteils an Bindemitteln, zumeist Klebstoffen erfolgt. Bei Zugabe einer hohen Menge an Klebstoff ist die Ökologie der Dämmstoffplatte in Frage zu stellen, in jedem Fall wird das Produkt verhältnismäßig teuer und somit nicht marktfähig.

Der Erfindung liegt die Aufgabe zugrunde, eine Dämmstoffplatte aus Stroh anzugeben, welche diese Nachteile nicht aufweist, insbesondere unter Verwendung einer sehr geringen Menge an Klebstoff hergestellt und nach der Verwendung problemlos entsorgt werden kann. Ziel der Erfindung ist somit, eine ökologische Dämmstoffplatte aus Stroh zu schaffen.

Erfindungsgemäß werden diese Ziele durch die kennzeichnenden Merkmale des Patentanspruchs 1 bzw. des Anspruches 9 gelöst; mit anderen Worten, es wird ein Dämmelement dadurch erzeugt, dass Stroh zu einer gleichmäßig dicken Matte bzw. Bahn ausgelegt bzw. gestreut wird und auf die obere und untere Fläche dieser Stroh-Matte ein Fasergewebe aufgebracht wird. Danach erfolgt eine Kompression des Aufbaus, bestehend aus zumindest den beiden Decklagen und der Stroh-Mittellage auf die zu erreichende End-Dicke der Platte bzw. Soll-Dichte. Dabei erfolgt das Erzeugen der Plattendicke über eine entsprechende Kompression des Strohs. Um die Soll-Dichte zu erreichen, wird das notwendige Flächengewicht der Stroh-Matte ermittelt und eine entsprechende Menge an Stroh pro Flächeneinheit für die Herstellung der Platte verwendet.

In weiterer Folge erfolgt ein Vernähen des gesamten Aufbaus normal zur Plattenebene, wodurch die einzelnen Lagen miteinander mechanisch (ohne Klebstoff, etc.) verbunden werden und eine Dämmstoff-Platte erzeugt wird. Das Vernähen des auf die Ziel-Dichte komprimierten Aufbaus erfolgt passenderweise in Produktionsrichtung der Platte (wenn es eine solche gibt), wodurch eine Endlos-Produktion möglich ist. Das Vernähen des Schicht-Aufbaus, bestehend aus der Stroh-Mittellagen und der oberen und unteren Gewebebahn kann mit unterschiedlichsten Fadenmaterialien sowie Stichtechniken erfolgen. Die Herstellung der Platten ist unter Verwendung eines Ein-Faden-Nähsystems, beispielsweise des Kettenstichs oder eines Zwei-Faden-Nähsystems, beispielsweise des Doppelsteppstichs möglich.

Als Fadenmaterial können Baumwolle, Hanf, oder auch Kunststoffe, in Spezialfällen auch (metallischer) Draht (dann ist der Begriff "vernähen" weit zu fassen) verwendet werden.

Bevorzugt werden als weiterer Prozessschritt nach dem Zusammennähen der Lagen zu einer Platte die Umschlingungen der Naht, d.h. die Knotenpunkte, mit einem Klebstoff fixiert, um ein späteres Aufziehen, das heißt Lösen der Naht, zu verhindern. Die Menge des, bevorzugt organischen, leicht abbaubaren Klebstoffes (z. Bsp. auf Eiweisbasis, oder Birkenpech, oder Knochenleim, etc.) beträgt dabei vorteilhafterweise unter 0,1 Gew.-%, besonders bevorzugt unter 0,01 Gew.-% der fertigen Dämmplatte. Neben organischen Klebstoffen können auch "Superkleber" auf Polyacrylbasis (Loctite 45, etc.), Sprühkleber, z.Bsp. von Würth, oder Schmelzkleber (von Pattex oder Henkel) verwendet werden.

Die vernähte Stroh-Dämmplatte wird in weitere Folge auf die geforderte Abmessung formatiert. Hierfür können in der Holzindustrie üblichen Maschinen wie zum Beispiel eine Kreissäge oder Bandsäge verwendet werden.

Die vernähte Stroh-Dämmplatte kann für verschiedene Anwendungsgebiete, insbesondere zur Dämmung von Gebäuden, eingesetzt werden. In Abhängigkeit von der Dichte variieren die Festigkeitswerte und die Dämm-Eigenschaft der Platte. Die für den Anwendungsfall geforderten Materialeigenschaften können über die Kompression des Materials bei der Herstellung und somit über die Plattendichte erreicht werden.

Wesentlich ist, dass die vernähte Stroh-Dämmplatte aufgrund der erzielten mechanischen Festigkeitswerte in einem Wärmedämmverbundsystem auf der Außenfassade von Gebäuden verwendet werden kann. Ein Befestigen der Dämmplatte auf der Außenwand ist mittels Klebespachtel möglich. Vorzugsweise erfolgt ein zusätzliches Befestigen der Platten mit Fassadendübeln. Das Aufbringen einer speziellen Putzträgerschicht auf die Platte ist nicht erforderlich, da bei der Wahl eines entsprechenden, gitterartigen Fasergewebes als Decklagen-Material wie es im Stand der Technik bekannt ist, eine gute Anhaftung der Putzschicht gewährleistet ist. Gleiches gilt für den Verbund von tragender Wand und Dämmplatte mittels Klebespachtel.

Um die geforderte Dämmwirkung zu erzielen, ist gegebenenfalls das Anbringen von zwei oder mehrerer Platten übereinander/nebeneinander möglich. Vorteilhaft ist, bei der Montage von zwei Lagen an Platten diese in der Ebene versetzt anzuordnen, so dass es zu einer Überlappung der Stöße kommt.

Die Dichte der Stroh-Dämmplatte kann bevorzugt zwischen 50 und 120 kg/m³ variieren, besonders bevorzugt weisen die Platten einer Dichte von 80 kg/m³ ± 10 % auf.

Neben dem bereits beschriebenen Anwendungsfall der vernähten Stroh-Dämmplatte im Wärmedämmverbundsystem auf Außenfassaden kann die Platte beispielweise zur Dämmung von Wand-Gefachen oder als Zwischen-Sparren-Dämmung verwendet werden, und auch überall dort, wo bisher andere Dämmplatten eingesetzt werden.

Nach der Verwendungsdauer ist die Dämmplatte mit den erfindungsgemäßen Merkmalen einfach zu entsorgen, da sie im Wesentlichen aus Stroh und somit aus einem biologisch abbaubaren Material besteht. Gewebebahn und Fadenmaterial können gleichfalls aus biologisch abbaubaren Materialien bestehen. Werden hierfür nicht biologisch abbaubare Materialien verwendet, ist bei der erfindungsgemäßen Platte eine getrennte Entsorgung von Stroh und beispielsweise dem Fadenmaterial problemlos möglich.

Für die Verwendung der Platte zur Dämmung von Gebäuden ist es im Hinblick auf die geforderten Materialeigenschaften zweckmäßig, wenn die erfindungsgemäße Dämmplatte ein Flammschutzmittel aufweist und während oder nach der Plattenproduktion ein Fungizid zugesetzt wird. Dabei können alle im Stand der Technik bekannten Flammschutzmittel bzw. Fungizide verwendet werden, Rücksicht auf möglichst gute biologische Abbaubarkeit kann jederzeit genommen werden.

Im Folgenden wird ein Beispiel für eine erfindungsgemäße Stroh-Dämmplatte unter Hinweis auf die Zeichnung angeführt, dabei zeigt die einzige Figur eine erfindungsgemäße Dämmplatte in perspektivischer Ansicht.

Das Stroh-Material für die Herstellung der Platte wird passenderweise in Form von Rundballen angeliefert, die in der Landwirtschaft als Nebenprodukt anfallen. Eine Konkurrenz zur Lebensmittelproduktion besteht somit nicht. Bei der Erzeugung von Rundballen wird das Strohmaterial, insbesondere die Halme durch die Aufnahmegabel der Ballenpresse mehr oder weniger parallel zur Aufroll-Richtung ausgerichtet. Für die Herstellung der Plattenmittellage wird das Stroh vom Rundballen abgerollt. Eine weitere Orientierung der Halme bzw. des Strohs erfolgt nicht. Gegebenenfalls werden mehrere Lagen übereinander geschichtet, um das erforderliche Flächengewicht zu erreichen. Vorteilhaft ist es, bei einer diskontinuierlichen Herstellung, eine starre Unterlage mit parallelen Ausnehmungen zu verwenden, die ein Pressen der Matte sowie das nachfolgende Vernähen ermöglichen. Darüber hinaus ist es vorteilhaft, bereits vor dem Auflegen des Strohs die untere Gewebebahn, zum Beispiel ein Gitter (aus Jute, oder anderen organischen Materialien, oder auch aus Kunststoff), bevorzugt mit einer Maschenweite von 20 mm (± 10 %), auf die starre Unterlage aufzulegen. Nach Aufgabe von beispielsweise 8 kg Stroh pro m² Fläche sowie der Auflage der oberen Gewebebahn, die das gleiche Material sein kann, aber nicht sein muss, erfolgt die Kompression der Matte auf eine Dicke von beispielsweise 10 cm, wodurch eine Plattendichte von 80 kg/m³ erzielt wird.

Die auf eine Dicke von etwa 10 cm zusammengepresste Strohmatte inklusive der Gewebebahnen wird im gepressten Zustand vernäht, das heißt von der Oberseite wird mit einer dafür vorgesehenen Nähnadel ein Faden (Oberfaden) durch die gepresste Matte geführt und auf der gegenüberliegenden Seite mit einem weiteren Faden (Unterfaden) umschlungen. Danach wird die Nadel inkl. Oberfaden zurückgezogen und ca. 2 cm weitertransportiert, um den nächsten Stich zu erzeugen. Bevorzugt besteht der Faden/bestehen die Fäden aus biologisch abbaubaren, umweltverträglichem Material

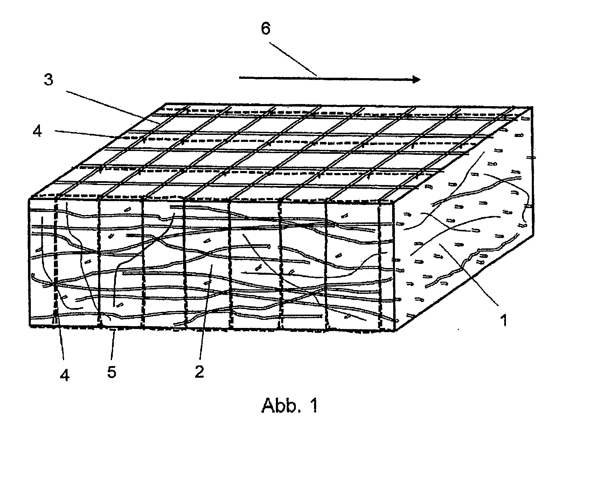

Die Figur zeigt einen Abschnitt einer vernähten Stroh-Dämmplatte 1. Das Strohmaterial der Mittellage 2 weist eine Vorzugsrichtung auf, d.h. die Halme sind überwiegend annähernd parallel zueinander ausgerichtet, dargestellt in Fig. 1 durch die Orientierung der Halme auf den Schmalflächen der Platte. Diese Anordnung erhält man beim Aufschütten des Strohs auf die Unterlage praktisch von selbst. Die im Wesentlichen ebenen Oberflächen der Platte 1 werden durch ein die Plattenfläche abschließendes Gittergewebe 3 mit einer Maschenweite von etwa 2 cm gewährleistet. Vorzugsweise, aber ohne darauf beschränkt zu sein, wird hierbei ein für Bauzwecke bestimmtes Putzträgergitter verwendet. Das Vernähen der Lagen zu einer Platte erfolgt beispielsweise mittels Doppelsteppstich mit einem Oberfaden 4 und einem Unterfaden 5. In weiterer Folge werden die auf der Plattenunterseite erzeugten Fadenumschlingungen mit einem Klebstoff fixiert (nicht dargestellt), um bei einem Zuschnitt der Platte ein Aufziehen der Naht zu verhindern. Die Ausbildung von im Wesentlichen parallel verlaufenden Nähten erfolgt im Abstand von ca. 2 cm quer zur Produktionsrichtung 6 der Platte.

Selbstverständlich können auch Quernähte vorgesehen werden, diese können untereinander gleichen Abstand aufweisen wie die Längsnähte oder auch nicht.

Bei einer Platten-Dichte von ca. 80 kg/m³ und einer Stärke der Platte von 10 cm werden ausreichend hohe Festigkeitswerte erreicht, um die Platte im Wärmedämmverbundsystem auf der Außenwand zu verwenden. Die Querzugfestigkeit wird hierbei durch die Nähte erzeugt, die Schubsteifigkeit durch die Kompression des Strohs sowie die Nähte, die das Bauelement mechanisch fixieren. Die Wärmeleitfähigkeit der Dämmplatte kann mit 0,04 W/(m*K) angegeben werden.

Die Erfindung kann verschiedentlich variiert und ausgestaltet werden, so ist es möglich, die Mittellage mehrschichtig auszubilden, indem die Strohhalme einer Schicht mehr oder weniger parallel zueinander ausgerichtet und die einzelnen Schichten kreuzweise zueinander in der Plattenebene gedreht werden. Dabei ist es möglich, eine oder auch mehrere Gitterlagen, entsprechend den Decklagen, zwischen den oder einigen Schichten vorzusehen, wodurch die mechanischen Eigenschaften der Platte als Ganzes weiter verbessert werden.

Das Stroh bzw. die Faserstoffe werden im Allgemeinen ohne spezielle Vorbereitung oder Vorbehandlung verarbeitet, in Sonderfällen können aber übliche Vorbehandlungen vorgesehen werden, beispielsweise Entstauben, Ablängen, Besprühen mit Fungiziden, brandhemmenden Mitteln oder anderen Chemikalien. Diese können vor bzw. während der Herstellung der Platte eingesetzt werden.

Da die verwendeten Materialien für Fäden, Decklagen und gegebenenfalls Klebstoff vorteilhafterweise allesamt organischen, natürlichen Ursprungs sind, sind die angegebenen, beispielhaften Maße und Gewichte und die daraus abgeleiteten Größen mit Toleranzen behaftet, die deutlich größer sind als es im industriellen Baugewerbe üblich ist. Dies spielt beim angegebenen Verwendungszweck aber keine nachteilige Rolle. Es können selbstverständlich die Fäden für das Vernähen und die Materialien der Decklagen und auch der Klebstoff aus synthetischen Materialien bestehen, ohne den Erfindungsbereich zu verlassen, da die Erfindung in ihrem Kern das Vernähen der zumindest drei Lagen betrifft.

Die Begriffe "oben", "unten", "eben", etc. werden, soweit nichts anderes angegeben ist, in ihrem auf diesem Gebiete der Technik landläufigen Sinne verwendet; Zahlenangaben sind mit einer Bandbreite von ± 10 % zu verstehen.

## Patentansprüche

1. Dämmplatte, aufweisend einen mindestens dreilagigen Aufbau, mit einer Mittellage (2) aus Stroh oder ähnlichen langfaserigen, nachwachsenden Rohstoffen, und jeweils einer oberen und einer unteren Decklage (3) aus einem flexiblen Faser-Gewebe, **dadurch gekennzeichnet, dass** die Lagen miteinander vernäht sind.

2. Dämmplatte nach Anspruch 1, **dadurch gekennzeichnet, dass** die Halme/Fasern des Strohs oder des ähnlichen Materials, das als Dämmaterial verwendet wird, im Wesentlichen parallel zur Plattenebene orientiert sind.

3. Dämmplatte nach Anspruch 1 oder 2, **dadurch gekennzeichnet, dass** die Mittellage (2) zumindest 85 % der Dicke der gesamten Platte einnimmt.

4. Dämmplatte nach einem der voranstehenden Ansprüche, **dadurch gekennzeichnet, dass** die Mittellage (2) der Platte einen mehrschichtigen Aufbau aufweist.

5. Dämmplatte nach einem der voranstehenden Ansprüche, **dadurch gekennzeichnet, dass** mehrere, zueinander im Wesentlichen parallel verlaufende Nähte vorgesehen werden.

6. Dämmplatte nach Anspruch 5, **dadurch gekennzeichnet, dass** zumindest zwei Scharen von Nähten, die einander kreuzen, vorgesehen sind.

7. Dämmplatte nach einem der voranstehenden Ansprüche, **dadurch gekennzeichnet, dass** die Umschlingungen der Naht, bzw. der Nähte, d.h. die einzelnen Knoten, mittels eines Klebstoffs fixiert werden.

8. Dämmplatte nach einem der voranstehenden Ansprüche, **dadurch gekennzeichnet, dass** die Platte durch einen Sägevorgang auf Maß geschnitten wird.

9. Verfahren zur Herstellung einer Dämmplatte nach einem der Ansprüche 1 bis 8, **dadurch gekennzeichnet, dass** eine Decklage (3) auf eine Arbeitsoberfläche aufgelegt wird, dass Stroh oder ähnlich langfaseriger nachwachsender Rohstoff aufgeschüttet und geglättet wird, dass sodann eine weitere Decklage (3) aufgelegt wird, dass sodann eine Kompression auf die vorbestimmte Dicke erfolgt, und dass im komprimierten Zustand das Vernähen der Schichten vorgenommen wird.

10. Verfahren nach Anspruch 9, **dadurch gekennzeichnet, dass** für einen mehrlagigen Aufbau werden die Halme/Fasern einer Lage mehr oder weniger parallel zueinander ausgerichtet und die einzelnen Lagen kreuzweise zueinander in der Plattenebene gedreht werden.

11. Verfahren nach Anspruch 10, **dadurch gekennzeichnet, dass** zumindest eine Zwischenlage entsprechend einer Decklage (3) zwischen zwei Lagen der Mittelschicht (2) eingebracht wird.
